# EUROPEAN PATENT APPLICATION

(11) **EP 4 215 689 A2**
(43) Date of publication of application: **26.07.2023**
(21) Application number: 22199742.2
(22) Date of filing: 05.10.2022
(51) Int. Cl.: E04F 15/024, E04F 11/025, E04F 11/035, F16B 7/04, E04F 11/02

(54) **A BRACING SYSTEM AND A SUPPORT ASSEMBLY AND KITS AND PARTS THEREOF**

(30) Priority: 08.10.2021 GB 202114427
(71) Applicant: Big Foot Systems Limited, Hailsham East Sussex BN27 3WA (GB)
(72) Inventor: OLUWAROUNKE, Emmanuel, East Sussex BN27 3WA (GB); BIRCH, Sam, East Sussex BN27 3WA (GB)
(74) Representative: HGF

(57) **Abstract**

A bracing system for bracing a frame formed of a plurality of frame elements. The bracing system comprises: a bracket having a first part releasably interlocked with a second part, wherein, when the first part is interlocked with the second part, the bracket is arranged to clamp a first of the plurality of frame elements; a first bar having a first end connected to the first part and a second end connected to a second of the plurality of frame elements, and a second bar having a first end connected to the second part and a second end connected to a third of the plurality of frame elements. The first part is arranged to transfer a load from the second frame element to a first side of the first frame element when the first and second parts are interlocked. The second part is arranged to transfer a load from the third frame element to a second side of the first frame element when the first and second parts are interlocked .

## Description

This invention relates to a bracing system and a support assembly. More specifically, although not exclusively, this invention relates to a bracing system for an elevated platform used to support plant, and a support assembly for providing safe access at height in a non-penetrative support assembly.

### BACKGROUND

When plant, for example air conditioning units, air handlers, chillers and plant rooms, is supported, or access is provided at substantial height from the roof, instability and rocking movement of a support frame supporting the plant and/or person can be observed. This rocking movement may be caused by a user accessing the plant, or by high winds that impact the plant at height.

Current bracing systems for support frames are only effective between very limited frame heights and require considerable time to install. Furthermore, prior art designs need to be mounted in a specific order when assembling the support frame, which makes it highly inconvenient to retrofit a bracing system after a support frame has been installed, as this may require removing the plant, typically requiring a crane, and potentially disassembling the entire support frame in order to slide on the components of the bracing system as the support frame is built.

Safe access is required to service plant and or to avoid obstacles on roofs such as ducts & pipe work. To safely access or service plant when height of fall could exceed 500mm, British standard states, guardrail must be installed. Industry standard steps & handrail are only able to support a very limited roof height, typically up to 800mm as standard. Prior art solutions to this problem require steps & handrails to be fabricated to fit each roof requirement over 800mm height. This results in long lead-time and higher design costs. As height requirement increases, design size becomes very substantial, and the constituent components become increasingly difficult to transport and to stock.

The present invention seeks to address at least some of these issues.

### BRIEF SUMMARY OF THE DISCLOSURE

Viewed from a first aspect, there is provided a bracing system for bracing a frame formed of a plurality of frame elements. The bracing system comprises: a bracket having a first part releasably interlocked with a second part, wherein, when the first part is interlocked with the second part, the bracket is arranged to clamp a first of the plurality of frame elements; a first bar having a first end connected to the first part and a second end connected to a second of the plurality of frame elements, and a second bar having a first end connected to the second part and a second end connected to a third of the plurality of frame elements. The first part is arranged to transfer a load from the second frame element to a first side of the first frame element when the first and second parts are interlocked. The second part is arranged to transfer a load from the third frame element to a second side of the first frame element when the first and second parts are interlocked.

Thus, the present bracing system substantially reduces instability and rocking, for example under heavy wind loading, in support assemblies. The present bracing system is also compatible with various orientations of support assembly frame elements, and allows a user to add bracing systems to be retrofit to existing support assemblies.

The first part may be secured to the second part via a single fixing point. This provides a quick and convenient way of clamping and releasing the bracket from the frame element.

The first side may be adjacent to the second side. The first side may be substantially perpendicular to the second side. This advantageously allows for compatibility with profiles having a substantially square or rectangular cross-section.

When the first and second parts are disengaged, the bracket may be slidable along the first frame element. This advantageously provides increased user adjustability.

The first frame element may have a longitudinal axis. The first bar and the second bar may be mountable at a plurality of discrete angles relative to the longitudinal axis. The first bar may be mountable at a first angle and the second bar be mountable at a second angle different to the first angle.

One of the first part or the second part may comprise a tongue portion arranged to extend through a corresponding slot formed in the other of the first part or the second part to interlock with the other of the first part or the second part. This advantageously allows the two parts to be separated while the frame is under load.

Upon releasing the second part from the first part, the second part may be arranged to rotate relative to the first part, such that the first part is separable from the second part.

The first part may comprise a first flange portion for securing the first end of the first bar thereto. The first part and the second part may be arranged to form a second flange portion for securing the second end of the second bar thereto.

The first bar may comprise a first flange portion at the first end. The first bar may comprise a second flange portion at the second end. The first bar may comprise an interconnection portion between the first flange portion and the second flange portion.

When clamped, the first part may abut two sides of the frame element. When clamped, the second part may abut three sides of the frame element.

The interconnecting portion may comprise a longitudinal axis. Any of the first flange portion or the second flange portion extend at an acute angle relative to the longitudinal axis of the interconnecting portion.

The interconnecting portion may have a planar surface defining a plane. The first flange portion and the second flange portion may be disposed on opposed sides of the plane. This advantageously provides a bracing system which can accommodate the thickness of other brackets which may be present on the frame elements.

The first bar may have substantially the same profile as the second bar. By using similar bars, this reduces the need to stock different bars for the first and second bars, which reduces waste as the same bar can be used interchangeably.

The bracing system may comprise a C-shaped bracket for connecting the second end of the second bar to the third frame element. The bracing system may comprise a C-shaped bracket for connecting the second end of the first bar to the second frame element.

The bracing system may comprise a second bracket having a first part arranged to releasably interlock with a second part. When the first part of the second bracket is interlocked with the second part of the second bracket, the second bracket may be arranged to clamp the second frame element. The second end of the first bar may be connectable to the second bracket via the first part of the second bracket.

The bracing system may comprise a third bracket having a first part arranged to releasably interlock with a second part. When the first part of the third bracket is interlocked with the second part of the third bracket, the third bracket may be arranged to clamp the third frame element. The second end of the second bar may be connectable to the third bracket via the first part of the third bracket.

Any of the first frame element, the second frame element and the third frame element may have the same cross-sectional profile. Any of the first frame element, the second frame element and the third frame element may have a box section profile.

Viewed from a further independent aspect, there is provided a bracket for use in the bracing system according to any preceding claim.

Viewed from a further independent aspect, there is provided a bracket comprising: a first part releasably interlockable with a second part. When the first part is interlocked with the second part, the bracket is arranged to clamp a first frame element. The first part is arranged to transfer a load from a first bar connected thereto to a first side of the first frame element when the first and second parts are interlocked. The second part is arranged to transfer a load from a second bar connected thereto to a second side of the first frame element when the first and second parts are interlocked. The first side is adjacent to the second side. In some cases, the first side is substantially perpendicular to the second side.

Viewed from a further independent aspect, there is provided a bracing kit for bracing a frame formed of a plurality of frame elements. The bracing kit comprises a bracket as defined in the appended claims, and a plurality of bars for use as the first bar and the second bar in the bracing system as defined in the appended claims. A kit of parts can be more easily brought to site which provides a more straightforward retrofit compared to having to transport a fully assembled bracing system.

Viewed from a further independent aspect, there is provided a support assembly comprising: a pair of support legs arranged to secure a platform above a surface in a first direction, wherein each of the pair of support legs has a bracket according to the appended claims secured thereto, and a bar connecting the pair of support legs via their respective bracket. The support assembly is preferably suitable for supporting a load above a surface. The load may be a person. The load may be plant, for example an air conditioning unit, air handlers, chillers, a plant room or similar HVAC-R equipment.

Viewed from a further independent aspect, there is also provided a support assembly comprising: one or more supports configured to secure a platform above a surface in a first direction. The platform is formed of a plurality of frame elements and has an upper area accessible from a first side of the platform and a second side of the platform adjacent the first side. The first side is at a first height relative to the surface and the second side is at a second height relative to the surface. The first height is different to the second height. The elevated platform assembly also comprises a step element comprising a pair of opposed side plates and at least one step secured between the opposed side plates for supporting a user. Each side plate has a first set of holes comprising a first pair of holes and a second pair of holes. The first pair of holes are spaced below the second pair of holes in the first direction. The step element is mounted to: the first side of the platform via the first pair of holes formed in the opposed side plates, or the second side of the platform via the second pair of holes formed in the opposed side plates. This advantageously utilises the same step elements to form step assemblies which can be fixed at different heights from the surface. The interchangeable step elements provides improved usability.

The support assembly is preferably suitable for supporting a load above a surface. The load may be a person. The load may be plant, for example an air conditioning unit, air handlers, chillers, a plant room or similar HVAC-R equipment.

The first pair of holes may be arranged as slots. The slots may extend in the first direction. This advantageously allows the same step element to be used with different sizes of profile with the same brackets.

The slots may extend by 10mm. This advantageously provides variable spacing between the holes, which allows the step element to be connected to both light duty frame and heavy duty frame.

The first set of holes may be arranged at an upper end of the opposed side plates. Each of the opposed side plates may comprise a second set of holes at a lower end of each side plate for securing a second step element thereto. The second set of holes may be in substantially the same arrangement as the first set of holes. This advantageously allows the same step element which is connectable to the platform to be connectable to a second step element to form a step assembly. Thus, a chain of step elements can be formed to provide access at any height from the surface.

The platform may comprise a first plurality of frame elements and a second plurality of frame elements mounted on top of the first plurality of frame elements. A first of the first plurality of frame elements may provide the first side of the platform. A first of the second plurality of frame elements may provide the second side of the platform.

The first of the second plurality of frame elements may have a height in the first direction. The first pair of holes may be spaced from the second set of holes by at least the height of the first of the second plurality of frame elements. This advantageously allows the same steps to be used with when there are different connection heights using the same brackets.

The first plurality of frame elements and the second plurality of frame elements may be formed as box section elements. Each box section element may have a longitudinal axis. The longitudinal axes of the first plurality of box section elements extend in a first direction and the longitudinal axes of the second plurality of box section elements extend in a second direction different to the first direction.

The support assembly may comprise one or more non-penetrative ground supports. This is advantageous as the support assembly can be free-standing on the surface and does not cause any damage to the surface on which the platform is mounted. The surface may be a rooftop.

Viewed from a further independent aspect, there is also provided a step element for a support assembly having one or more supports configured to mount a platform above a surface in a first direction. The platform has an upper area accessible by a user from a first side of the platform or a second side of the platform adjacent the first side. The first side is at a first height relative to the surface and the second side is at a second height relative to the surface. The first height is smaller than the second height. The step element comprises: a pair of opposed side plates, and at least one step secured between the opposed side plates. Each side plate has a first set of holes comprising a first pair of holes and a second pair of holes. The first pair of holes are spaced below the second pair of holes in the first direction. The step element is mountable to the first side of the platform via the first pair of holes formed in the opposed side plates. The step element is mountable to the second side of the platform via the second pair of holes formed in the opposed side plates.

The step element may comprise a handrail securable to one of the side plates of the step assembly.

Viewed from a further independent aspect, there is also provided a kit of parts for a support assembly, the kit of parts comprising: one or more supports configured to secure a platform above a surface in a first direction, a plurality of frame elements for providing the platform, the platform having an upper area accessible from a first side of the platform and a second side of the platform adjacent the first side. The first side is at a first height relative to a surface and the second side is at a second height relative to the surface. The first height is different to the second height. The kit of parts further comprises a pair of side plates. Each of the side plates has a first set of holes comprising a first pair of holes and a second pair of holes. The first pair of holes are spaced below the second pair of holes in the first direction. The kit of parts further comprises a step mountable between the side plates. The first pair of holes are configured to mount the step element to the first side of the platform. The second pair of holes are configured to mount the step element to the second side of the platform. A kit of parts can be more easily brought to site which provides a more straightforward installation procedure compared to having to transport a fully assembled support assembly.

The kit of parts may further comprise a bracing system as defined in the appended claims, or a bracing kit as defined in the appended claims. This advantageously provides a support assembly which has reduced instability and rocking, particularly under wind loading.

Viewed from a further independent aspect, there is provided a method of assembling a support assembly comprising the steps of: securing a platform above a surface in a first direction using one or more supports, wherein the platform is formed of a plurality of frame elements and has an upper area accessible from a first side of the platform and a second side of the platform adjacent the first side, wherein the first side is at a first height relative to the surface and the second side is at a second height relative to the surface, and wherein the first height is different to the second height, and securing a step element as defined in the appended claims to the first side or the second side of the platform.

Where the first set of holes of the first step element are arranged at an upper end of the opposed side plates and each of the opposed side plates comprises a second set of holes at a lower end of each side plate for securing a second step element thereto and where the second set of holes are in substantially the same arrangement as the first set of holes, the method comprises securing a second step element as defined in the appended claims to the first step element via the second set of holes of the first step element.

### BRIEF DESCRIPTION OF THE DRAWINGS

Aspects of the disclosure are further described hereinafter with reference to the accompanying drawings, in which:
Figure 1 illustrates an exemplary bracing system;
Figure 2 is a magnified view of a portion of the bracing system of Figure 1;
Figures 3A & 3B illustrate perspective views of an exemplary bracket;
Figures 4A & 4B illustrate perspective and 3/4 side views of an exemplary support assembly;
Figures 5A to 5C illustrate perspective and side views of an alternative exemplary support assembly;
Figures 6A and 6B illustrate an exemplary bar;
Figure 7 illustrates a further exemplary support assembly having two step assemblies mounted thereto;
Figure 8 illustrates the support assembly of Figure 6 without the step assemblies mounted thereto;
Figures 9A to 9D are magnified views of portions of the support assembly of Figure 7;
Figure 10A illustrates an exemplary step element with a bracket mounted in a first configuration;
Figure 10B illustrates the step element of Figure 9A with the bracket mounted in a second configuration;

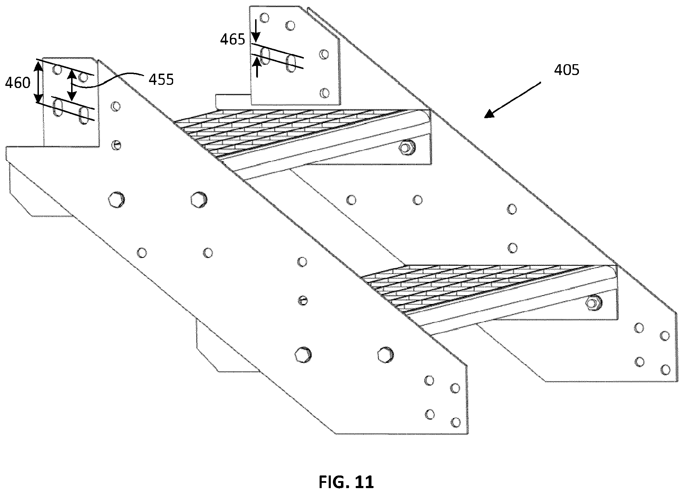

Figure 11 illustrates the step element of Figure 9A without a bracket mounted thereto.

### DETAILED DESCRIPTION

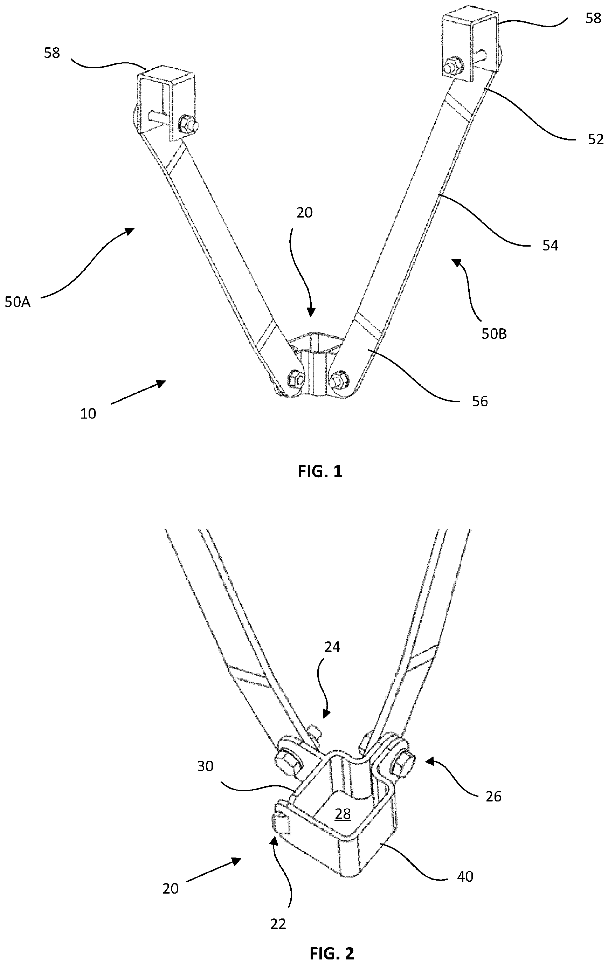

Figure 1 illustrates an exemplary bracing system 10 having a bracket for clamping to a frame element such as a box section element. The box section element may be a support leg or a part of a platform for supporting a person or plant as explained below. The bracing system also includes a first arm 50A connected to a first part 30 of the bracket 20 and a second arm 50A connected to a second part 40 of the bracket 20. C-shaped brackets 58 are also shown connected to the ends of the first and second arms 50A. The C-shaped brackets 58 allow each respective arm to be connected to a further frame element, for example further box section elements.

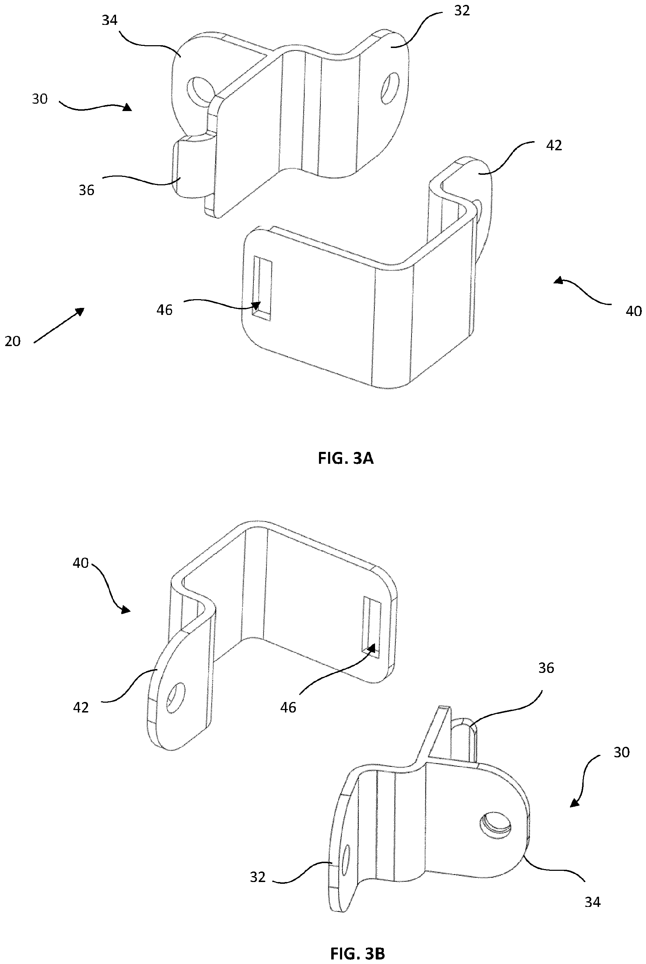

As shown in Figure 2, the first 30 and second parts 40 can be interlocked at a first end 22 and secured to one another at a second end 26. While the illustrated example uses a nut and bolt to secure the first 30 and second 40 parts together, it would be apparent this was merely one example of fastening means suitable for releasably securing the first 30 and second parts 40 together. When secured together, the first 30 and second 40 parts have respective inner surfaces which define an opening 28 for receiving the frame element. With reference to Figures 3A and 3B, the first part 30 has a substantially L-shaped body designed to abut two surfaces of the frame member when clamped. A first flange portion 32 extending from an end of the body provides a connection point to the first bar 50A and a second flange portion 34 extending on a different part of the body provides a connection point to the second bar 50B. The first 32 and second 34 flange portions each have a hole formed therein for receiving a fastener for securing the respective bar 50A, 50B thereto, but it would be apparent this was not essential. The first 32 and second 34 flange portions are also shown extending from adjacent portions of the body. The flange portions 32, 34, 42 can be considered to extend in an outward direction relative to the opening 28. The second part 40 has a substantially J-shaped body with a first flange portion 42 extending from an end of the body for connecting to the first bar 50A. The first 30 and second 40 parts are designed such that the first flange portion 32 of the first part 30 abuts the first flange portion 42 of the second part 40 when the bracket is clamped to the frame element. This allows the bar 50A to be connected to both flange portions 32, 42 using a single fixing point. When clamped, the first flange portions 32, 42 are arranged to abut one another approximately mid-way along one side of the bracket 20 as shown in Figure 2. This enables load from the first bar 50A to be transferred to the corresponding inner surface of the bracket and to apply a load to a designated side of the frame element. By having a single fixing point, it is also possible to easily release the second part 40 from the first part 30, as the first part 30 will still bear the load of the first bar 50A. This is allows the bracing system 10 to be easily mounted to a support assembly without having to first disassemble the entire support assembly. This is particularly useful in cases where a user has an existing support assembly installed and supporting plant and only subsequently realises there is undesirable movement in the support assembly. The present bracket 20 provides a convenient way to retrofit a bracing system to the support assembly to improve the stiffness of the support assembly.

While an L-shaped first part 30 and J-shaped second part 40 have been illustrated, it would be apparent these are merely exemplary shapes that allow the first 30 and second 40 parts to circumscribe a frame member having a particular cross-section, for example a square or rectangular cross-section. The first 30 and second 40 parts may be shaped differently while still retaining respective first 32, 42 and second 34 flange portions which function are described herein.

The first part 30 also has a tongue 36 extending from the body of the first part 30 which is arranged to pass through a slot 46 formed in the second part 40 to form the interlock. As the tongue 36 has a curved profile which extends away from the inner surface of the first part 30, this allows the second part 40 to be rotated relative to the first part 30 when engaging and disengaging the interlock between the parts 30, 40. While the tongue 36 is shown as part of the first part 30, and the slot 46 is formed in the second part 40, it would be apparent this was not essential and the first part may have a slot for receiving a tongue extending from the second part. Similarly, while a single tongue 36 and slot 46 are shown, this is merely an example of suitable inter-engaging elements for forming the interlock between the first 30 and second 40 parts.

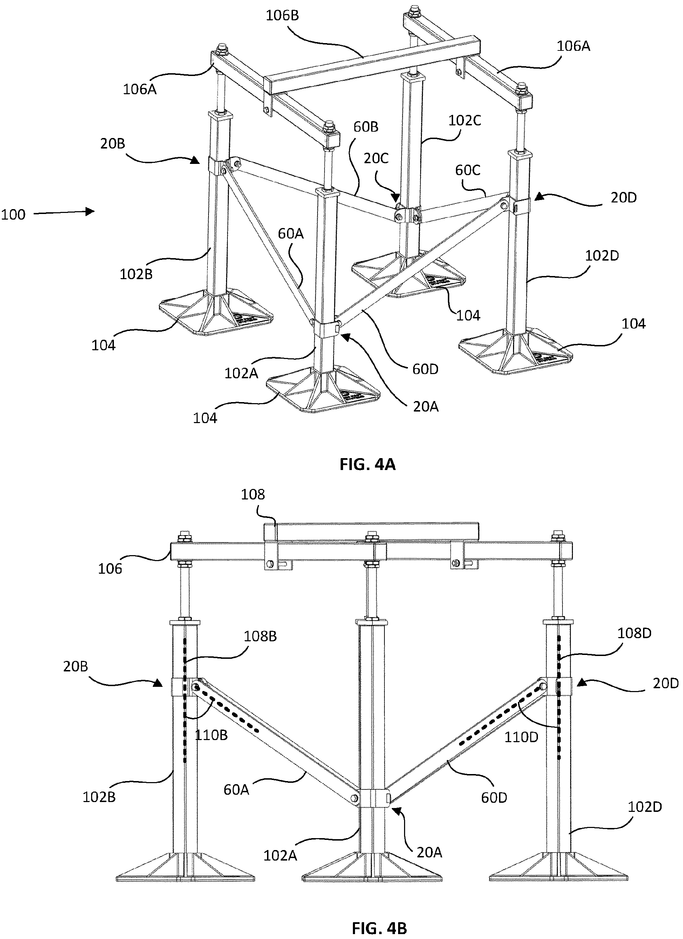

Figures 4A & 4B illustrate perspective and 3/4 side views of an exemplary support assembly 100. The support assembly 100 includes a platform and four support legs 102A-102D to support the platform above a surface. Each support leg also has a respective support foot 104 to provide a non-penetrative support assembly. This allows the support assembly to be free-standing on a surface, such a roof, where penetrating the roof is highly undesirable. The illustrated platform includes two frame elements 106A extending in a first direction and one frame element 106B extending in an orthogonal direction relative to frame elements 106A. As shown in Figures 4A and 4B, each support leg 102 has a bracket 20 secured thereto, and a bar 60 connects adjacent pairs of support legs 102. As shown in Figure 4B, the support legs 102 may be formed as frame elements, such as box section elements. The profile of the support leg may be the same as the frame elements which form the platform. The brackets 20 may be arranged at different heights on the support legs 102 to brace the support assembly 100. For example, a first bracket 20A may be secured below adjacent brackets 20B, 20D such that the bar 60A, 60D connecting the respective support legs 102B, 102D are at an angle 110B, 110D relative to a longitudinal axis 108B, 108D of the respective support leg 102B, 102D. While these angles 1110B, 110D the same, it would be apparent this was not essential. Where the support legs 102 are arranged in a square arrangement and all of the bars 60A-60D are the same length, the angles 110A-110D may be the same. However, different bars may be used which may provide different angles 110 between adjacent support legs 102. Similarly, where the platform being supported is not square, this may result in the bars 60 being at different angles 110 to one another. While a particular arrangement of frame elements are illustrated, it would be apparent the specific number and orientation were not essential, and the present bracing system is suitable for support assemblies having platforms formed of different arrangements of frame elements. The present bracing system 10 allows lateral forces, for example caused by wind exerting a force onto plant supported by the support assembly, to be transferred between adjacent pairs of support legs 102 to stiffen the overall support assembly 100. This is achieved by the brackets 20A-20D being shaped to transfer load from two adjacent support legs, for example 102B and 102D, onto adjacent sides of a respective support leg, for example 102A, clamped by a respective bracket 20A. This is particularly important with larger frame heights, under heavy plant and wind load.

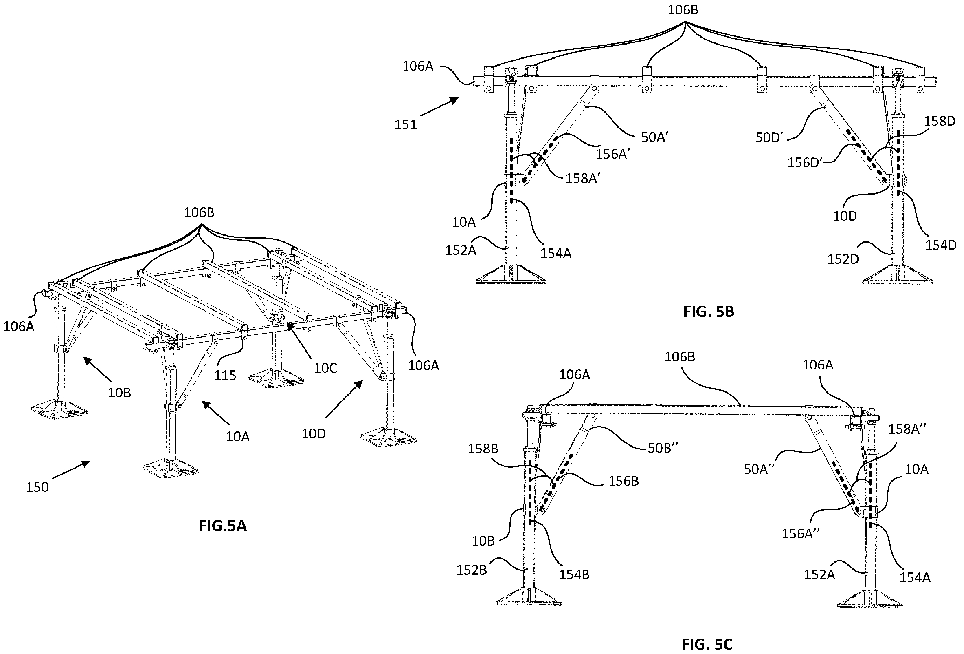

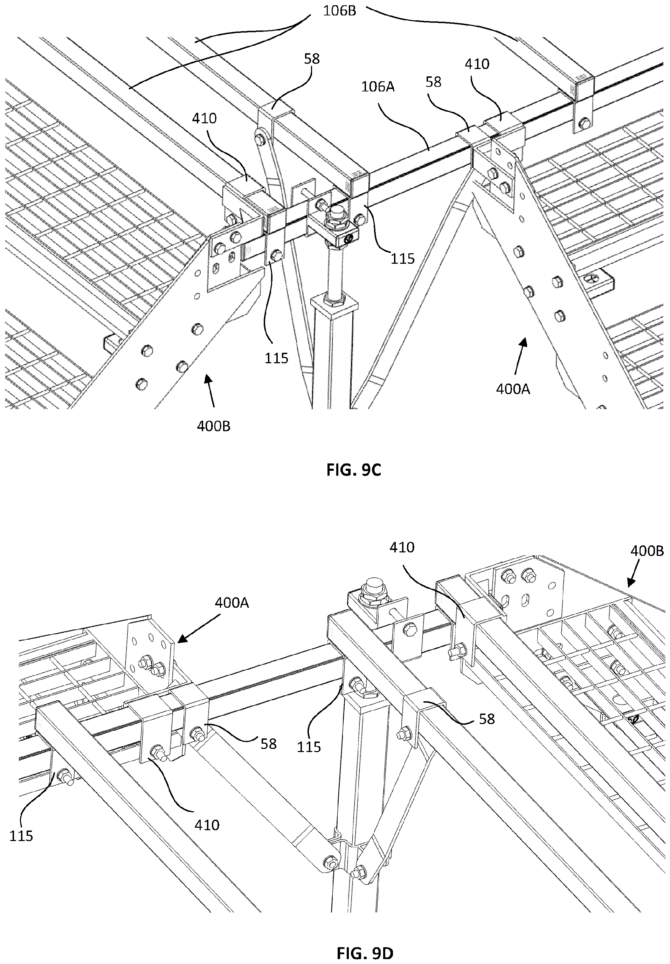

Figures 5A to 5C illustrate perspective and side views of an alternative exemplary support assembly 150. The support assembly 150 has a platform 151 including one layer of frame elements 106B arranged on top of a second layer of frame elements 106A. The frame elements 106A, 106B are shown as box section elements. The respective longitudinal axes of each of the box section elements 106A are arranged orthogonally relative to the respective longitudinal axis of each of the box section elements 106B. The platform is designed to provide an elevated platform for a person and/or plant. Each of the box section elements 106B has a C-shaped bracket 115 (see also Figures 9C and 9D) mounted thereto for securing a respective box section element 106B to a respective box section element 106A. While the C-shaped bracket 115 can be mounted or formed integrally with the box section element 106B, it would be apparent this was not essential and the C-shaped bracket 115 may be separable from the box section element 106B. The support assembly 150 includes four bracing systems 10A-10D, each of which are connected to a respective support leg 152, to one of the box section elements 106A and to one of the box section elements 106B. As the layer of box section elements 106B is mounted on top of box section elements 106A, the first bar 50A' of bracing system 10A may form a larger angle 158A' relative to the longitudinal axis 154A compared to the angle 156A" between the second bar 50A" of the bracing system 10A and the longitudinal axis 154A. Where the bars 50A' and 50A" are the same length, this is particularly the case. Furthermore, when the fixing point of a given bracket 10 is released, the bracket can be slid along the longitudinal axis 154 of a support leg 152 so that a user can set the arrangement of each bracing system 10 to a number of discrete positions. This variable height adjustment is achieved by the pivotal connections between the first 30 and second 40 parts of the brackets which allow the bars 50 connected thereto to pivot about their respective pivotal connection.

The present bracing system 10 can be used with various sizes of box section elements and in multiple orientations as shown by the alternative support assemblies shown herein. For example, the bracing system can be used with heavy duty box section, such as 50mm x 50mm profile or 50mm x 100mm profile, and light duty box section, for example 40mm x 40mm profile. The present bracing system 10 can also be used with support frames, access frames and louvre frames. Furthermore, the clamping design can be easily fitted after a support assembly has been installed, with either inboard or outboard frame orientations so an installer always has access to interlock or separate the parts 30, 40. As the bracing system 10 is formed of separable parts, the bracing system can be provided as a kit (not shown) for easier packaging and transportation.

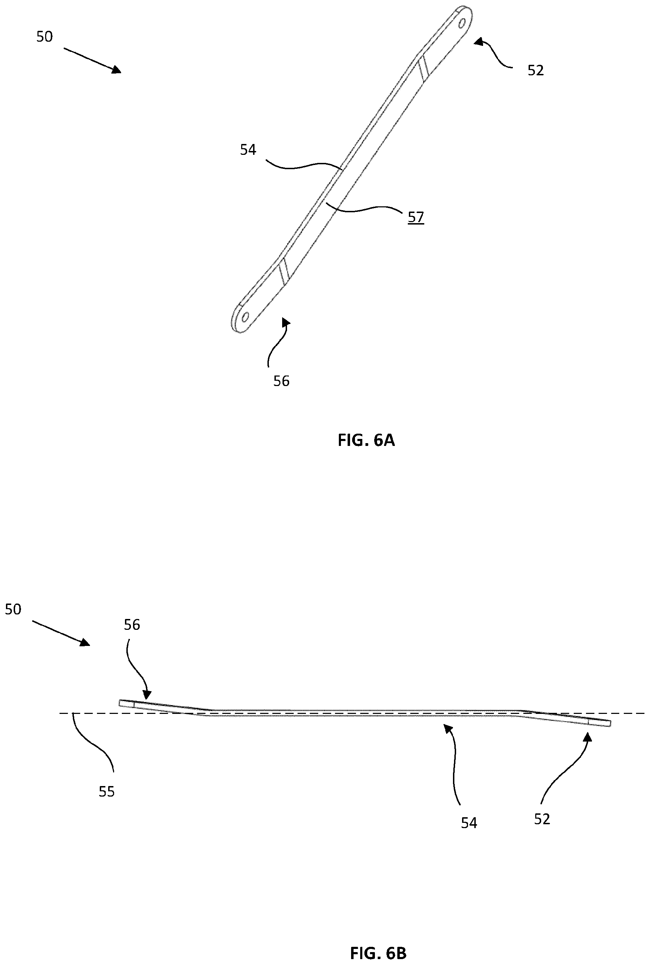

Figures 6A and 6B show an exemplary bar 50 that is used in the bracing system 10 of Figure 1A. As shown, the bar 50 has an elongate body, with a hole formed at each end of the body to provide a connection point to a respective bracket or fastener for mounting the bar 50 to a frame element. However, as shown in Figures 9C and 9D, there can be a large number of components located in close proximity to one another on the platform, and as such, it may not be possible to use straight bars 60, such as shown in Figure 4A and 4B, to brace a support assembly. The bar 50 illustrated in Figures 6A and 6B has first 52 and second 56 end portions which are linked by an interconnecting portion 54, with the end portions 52, 56 kinked relative to the interconnecting portion. That is to say, the end portions 52 and 56 extend at an angle relative to the longitudinal axis 55 of the bar 50. As shown, the end portions 52, 56 are disposed on either side of a plane defined by a major surface 57 the interconnecting portion 54. The angle between each of the end portions 52, 56 may be the same (i.e. the end portions 52, 56 may be parallel with one another). This allows for the end portions 52, 56 to abut with a corresponding surface of a frame element or bracket.

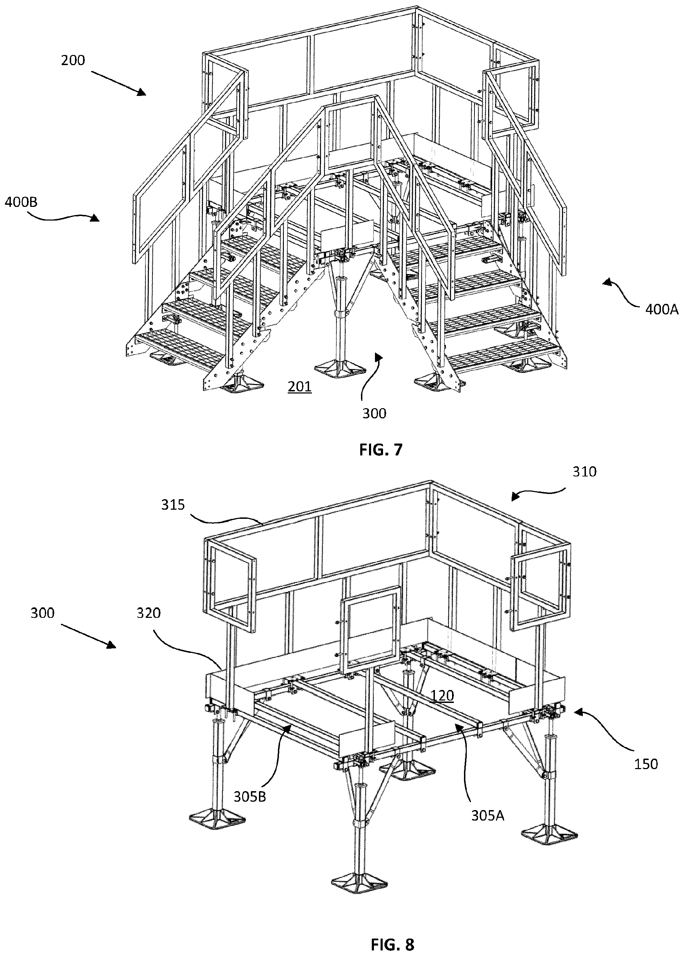

Figure 7 illustrates a support assembly 400 which is a combination of the support assembly 300 illustrated in Figure 8 and two step assemblies 400A, 400B mounted to different sides of the platform 151 of support assembly 300. The support assembly 300 is similar to the support assembly 150 described above and includes hand rail sections 310, 315 mounted to one or more box section elements 106A, 106B and skirt elements 320 mounted to the hand rail sections 310, 315. This provides a platform 151 with an upper surface 120 that is elevated above a surface 201, for example to provide safe access to plant, and/or to traverse other ancillary components that are present on a roof, such as ducting or pipes (not shown). The illustrated platform 151 is designed to be accessed from two sides 305A, 305B, for example adjacent sides of the platform 151. However, it would be apparent this was not essential and that access maybe from one side only, or from opposed sides of the platform 151.

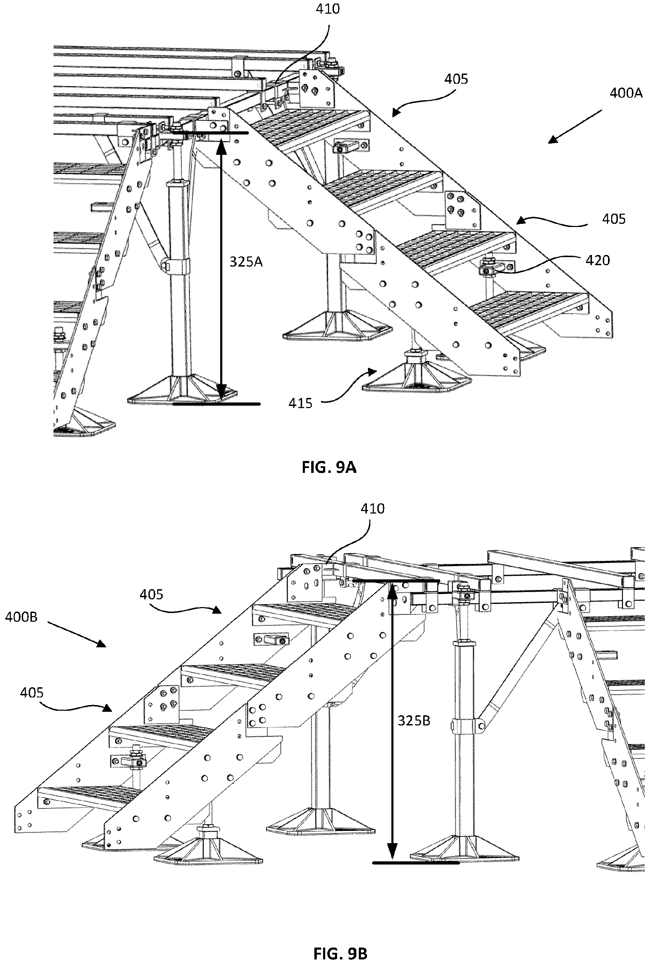

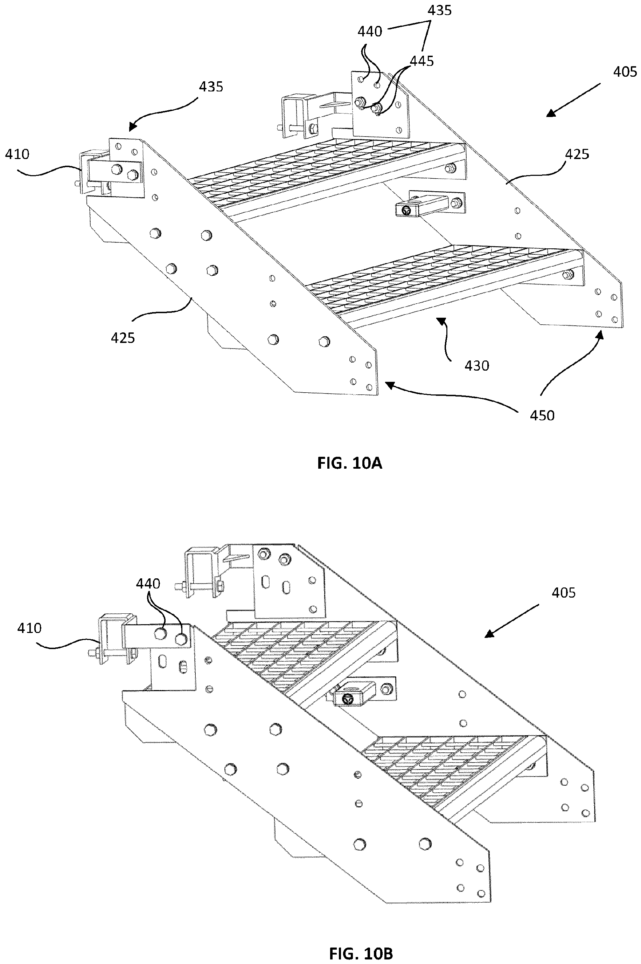

As shown in Figure 9A and 9B, and with reference to Figures 10A and 10B, each step assembly includes two substantially identical step elements 405. Each of the step elements is formed of opposed side plates 425 with two steps 430 formed between the side plates 425. While two steps 430 are shown, it would be apparent that this was not essential and one step may be used, or three or more steps may be used. The present step element 405 standardises one-step and two-step assemblies as each step element 405 can be used in different configurations to secure a given step element 405 to either side of the platform 151 and to another identical step element 405. Furthermore, the present step element 405 can be used with a variety of frame elements, for example box sections of different cross-section as exemplified above, by using a suitable bracket 410 adapted for use with a particular profile. For example, the present step element 405 can be connected to 40mm x 40mm profiles, 50mm x 50mm profiles and 100mm x 50mm profiles. This means there is no need to provide different configurations of step assemblies for different platform heights, as multiple step elements 405 can be connected to one another as required. Furthermore, as the same step element 405 can be used in different configurations, this reduces stocking levels and simplifies the assembly process and the lead times for a support assembly 200. Each side plate 425 also includes holes for mounting a bracket 420 for securing a support leg thereto.

As shown in Figure 9C, the first step assembly 400A is secured to one of the first layer of box section elements 106A at a first height 325A by a bracket 410 and the second step assembly 400B is secured to one of the second layer of box section elements 106B at a second height 325B by a similar bracket 410. This is achieved by having a first set of holes 435 at an upper end of each side plate 425 which includes a first pair of holes 440 arranged above a second pair of holes 445. The bracket 410 is secured to the step element 405 via one of the first 440 or second 445 pairs of holes using a bolt or similar fastener. The step element 405 shown in Figure 10A is configured to be mounted to the first (lower) layer of box section elements 106A. The step element 405 shown in Figure 10A is configured to be mounted to the second (upper) layer of box section elements 106B. Forming the second set of holes 445 as slots provides a variable spacing between the first 440 and second 445 pairs of holes which allows the same step element 405 to be secured to box section elements having different cross-sectional dimensions. For example, the slotted holes 445 may providing spacing 455 of at least 40mm to accommodate the height of a 40mm x 40mm profile, optionally including additional spacing for the thickness of a bracket 115 used to connect box section 106A to 106B. That is to say the spacing 455 between the first 440 and second 445 pairs of holes may be 40mm. Where a 50mm tall profile is used (i.e. a 50mm x 50mm profile or a 50mm x 100mm profile), a larger spacing 460 would be needed to accommodate the increased profile height. Thus, providing a slot length 465 that allows a fastener to travel by 10mm within the slot allows the same bracket 410 to be used to secure any profile height between 40mm and 50mm to the second pair of holes 445. Of course, it would be apparent that slotted holes 445 were not essential to the present invention, and the first set of holes 435 may be configured as circular holes. Similarly, while the specific hole dimensions and spacings 455, 460, 465 described herein are in relation to 40mm x 40mm profile, 50mm x 50mm and 50mm x 100mm profile, these are merely examples of light duty profile and heavy duty profiles. It would be apparent that different hole arrangements and dimensions could be used to a standardised support assembly which used different frame profiles as standard.

Each side plate 425 also includes a second set of holes 450 at a lower end to allow multiple step elements 405 to be connected together. By arranging the second set of holes 450 in the same manner as the first set of holes 435, a step element 405 is able to connect to either side of the platform 151 or an adjacent step element 405 using the first set of holes 435. Each side plate 425 also includes additional holes to secure hand rails thereto (see Figure 7). Thus, the present step element 405 can provide a standardized safe access solution to service plant at any roof height requirement.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A bracing system for bracing a frame formed of a plurality of frame elements, the bracing system comprising:
a bracket having a first part releasably interlocked with a second part, wherein, when the first part is interlocked with the second part, the bracket is arranged to clamp a first of the plurality of frame elements;
a first bar having a first end connected to the first part and a second end connected to a second of the plurality of frame elements, and
a second bar having a first end connected to the second part and a second end connected to a third of the plurality of frame elements,
wherein the first part is arranged to transfer a load from the second frame element to a first side of the first frame element when the first and second parts are interlocked, and
wherein the second part is arranged to transfer a load from the third frame element to a second side of the first frame element when the first and second parts are interlocked.

2. A bracing system according to claim 1, wherein the first part is secured to the second part via a single fixing point.

3. A bracing system according to claim 1 or 2, wherein the first side is substantially perpendicular to the second side.

4. A bracing system according to any preceding claim, wherein, when the first and second parts are disengaged, the bracket is slidable along the first frame element.

5. A bracing system according to claim 4, wherein the first frame element has a longitudinal axis, and wherein the first bar and the second bar are mountable at a plurality of discrete angles relative to the longitudinal axis.

6. A bracing system according to any preceding claim, wherein one of the first part or the second part comprises a tongue portion arranged to extend through a corresponding slot formed in the other of the first part or the second part to interlock with the other of the first part or the second part.

7. A bracing system according to any preceding claim, wherein, upon releasing the second part from the first part, the second part is arranged to rotate relative to the first part, such that the first part is separable from the second part.

8. A bracing system according to any preceding claim, wherein the first part comprises a first flange portion for securing the first end of the first bar thereto.

9. A bracing system according to claim 8, wherein the first part and the second part are arranged to form a second flange portion for securing the second end of the second bar thereto.

10. A bracing system according to any preceding claim, wherein the first bar comprises a first flange portion at the first end, a second flange portion at the second end, and an interconnection portion between the first flange portion and the second flange portion.

11. A bracing system according to claim 10, wherein the interconnecting portion comprises a longitudinal axis, and wherein any of the first flange portion or the second flange portion extend at an acute angle relative to the longitudinal axis of the interconnecting portion.

12. A bracket for use in the bracing system according to any preceding claim.

13. A bracing kit for bracing a frame formed of a plurality of frame elements, the bracing kit comprising:
a bracket according to claim 12, and
a plurality of bars for use as the first bar and the second bar in the bracing system of claims 1 to 11.

14. A support assembly comprising:
a pair of support legs arranged to secure a platform above a surface in a first direction, wherein each of the pair of support legs has a bracket according to claim 12 secured thereto, and
a bar connecting the pair of support legs via their respective bracket.

15. A support assembly comprising:
one or more supports configured to secure a platform above a surface in a first direction,
wherein the platform is formed of a plurality of frame elements and has an upper area accessible from a first side of the platform and a second side of the platform adjacent the first side, wherein the first side is at a first height relative to the surface and the second side is at a second height relative to the surface, and wherein the first height is different to the second height, and
a step element comprising a pair of opposed side plates and at least one step secured between the opposed side plates for supporting a user, wherein each side plate has a first set of holes comprising a first pair of holes and a second pair of holes, wherein the first pair of holes are spaced below the second pair of holes in the first direction,
wherein the step element is mounted to: the first side of the platform via the first pair of holes formed in the opposed side plates, or the second side of the platform via the second pair of holes formed in the opposed side plates.

16. A support assembly according to claim 15, wherein the first pair of holes are arranged as slots.

17. A support assembly according to claim 16, wherein the slots extend in the first direction.

18. A support assembly according to any of claims 15 to 17, wherein the first set of holes are arranged at an upper end of the opposed side plates, wherein each of the opposed side plates comprise a second set of holes at a lower end of each side plate for securing a second step element thereto, wherein the second set of holes are in substantially the same arrangement as the first set of holes.

19. A support assembly according to any of claims 15 to 18, wherein the platform comprises a first plurality of frame elements and a second plurality of frame elements mounted on top of the first plurality of frame elements, wherein a first of the first plurality of frame elements provides the first side of the platform and a first of the second plurality of frame elements provides the second side of the platform.

20. A support assembly according to claim 19, wherein the first of the second plurality of frame elements has a height in the first direction, and wherein the first pair of holes are spaced from the second set of holes by at least the height of the first of the second plurality of frame elements.

21. A support assembly according to claim 19 or 20, wherein the first plurality of frame elements and the second plurality of frame elements are formed as box section elements, each box section element having a longitudinal axis, and wherein the longitudinal axes of the first plurality of box section elements extend in a first direction and the longitudinal axes of the second plurality of box section elements extend in a second direction different to the first direction.

22. A step element for a support assembly having one or more supports configured to mount a platform above a surface in a first direction, the platform having an upper area accessible by a user from a first side of the platform or a second side of the platform adjacent the first side, wherein the first side is at a first height relative to the surface and the second side is at a second height relative to the surface, and wherein the first height is smaller than the second height, the step element comprising:
a pair of opposed side plates, and
at least one step secured between the opposed side plates,
wherein each side plate has a first set of holes comprising a first pair of holes and a second pair of holes, wherein the first pair of holes are spaced below the second pair of holes in the first direction,
wherein the step element is mountable to the first side of the platform via the first pair of holes formed in the opposed side plates, and
wherein the step element is mountable to the second side of the platform via the second pair of holes formed in the opposed side plates.

23. A kit of parts for a support assembly, the kit of parts comprising:
one or more supports configured to secure a platform above a surface in a first direction,
a plurality of frame elements for providing the platform, the platform having an upper area accessible from a first side of the platform and a second side of the platform adjacent the first side, wherein the first side is at a first height relative to a surface and the second side is at a second height relative to the surface, and wherein the first height is different to the second height
a pair of side plates, each of the side plates having a first set of holes comprising a first pair of holes and a second pair of holes, wherein the first pair of holes are spaced below the second pair of holes in the first direction,
a step mountable between the side plates,
wherein the first pair of holes are configured to mount the step element to the first side of the platform, and
wherein the second pair of holes are configured to mount the step element to the second side of the platform.

24. A kit of parts according to claim 23 further comprising a bracing system according to any of claims 1 to 11, or a bracing kit according to claim 13.

25. A method of assembling a support assembly comprising the steps of:
securing a platform above a surface in a first direction using one or more supports, wherein the platform is formed of a plurality of frame elements and has an upper area accessible from a first side of the platform and a second side of the platform adjacent the first side, wherein the first side is at a first height relative to the surface and the second side is at a second height relative to the surface, and wherein the first height is different to the second height, and
securing a step element as according to claim 22 to the first side or the second side of the platform.
